# EUROPEAN PATENT SPECIFICATION

(11) **EP 1 676 064 B1**
(45) Date of publication and mention of the grant of the patent: **15.07.2009**
(21) Application number: 04762931.6
(22) Date of filing: 18.10.2004
(51) Int. Cl.: F16K 3/26, F24D 19/00

(54) **AN ADJUSTABLE REGULATOR INSERT WITH LINEAR SETTING/FLOW CHARACTERISTIC**
VERSTELLBARER REGLEREINSATZ MIT LINEARER EINSTELLUNG/DURCHFLUSSKENNLINIE
ELEMENT D'INSERTION DE REGULATEUR REGLABLE PRESENTANT UNE CARACTERISTIQUE DE REGLAGE/ECOULEMENT LINEAIRE

(30) Priority: 16.10.2003 DK 200301523
(43) Date of publication of application: 05.07.2006
(73) Proprietor: FlowCon International A/S, 4200 Slagelse (DK)
(72) Inventor: MOESBY, Peter, DK-4200 Slagelse (DK)
(74) Representative: Sundien, Thomas
(86) International application number: PCT/DK2004/000712
(87) International publication number: WO 2005/038314

(56) References cited:
- WO-A1-95/12082
- US-A- 5 178 324

## Description

The invention relates to an adjustable regulator insert as featured in the preamble to claim 1.

Such regulator insert is known eg from WO 95/12082 which shows a regulator insert that comprises a cup-shaped part being at the one end provided with radial inflow openings and, at the other end, with radial and axially extending slot-shaped outflow openings. The insert is configured with a roller membrane that closes off the outflow openings to a smaller or larger degree in response to the difference in pressure across the insert, so as to accomplish an essentially constant flow of liquid through the insert. The roller membrane is influenced by two oppositely oriented forces; viz, on the side where the outflow openings are located, by the pressure within the insert and a helical spring that seeks to keep the outflow openings open and, on the opposite side, by the pressure prevailing immediately outside the inflow openings of the insert, liquid communication being established there between. In case of a given difference in pressure across the insert, the roller membrane will adapt at a state of equilibrium between these forces which results in a constant liquid flow through the insert. In the shown regulator insert the overall area of the inflow openings can set incrementally in advance - preferably to a desired constant liquid flow through the insert.

When it is desired to adjust this regulator insert from one specific liquid flow to another, exclusively the overall area of the inflow openings is modified. That is, no other parameters in the regulator insert are changed, and hence a linear correlation between the size of the overall area of the inflow openings and the constant liquid flow across the insert is not accomplished. It is therefore necessary to have a non-linear scale on the adjustment mechanism or to resort to a curve showing the correlation. For that reason it is desirable, in particular in case of stepless adjustment of the overall area of the inflow openings, to accomplish a linear correlation between the size of the overall area of the inflow openings and the constant liquid flow across the insert.

It is therefore an object of the invention to provide a regulator insert of the type featured above, wherein an at least approximately linear correlation is accomplished between the size of the overall area of the inflow openings and the constant liquid flow across the insert.

This is accomplished by configuring the regulator insert as featured in the characterising part of claim 1.

Hereby an at least approximately linear correlation between the size of the overall area of the inflow openings and the constant liquid flow across the insert is accomplished, which results in an unequivocal correlation between the physical adjustment performed and the magnitude of the constant liquid flow. This means that, eg by a simple adjustment of the inflow openings to twice their former size, a flow results which is also twice its former size. This is of interest, since it is hereby possible to perform a well-defined adjustment of the flow without first having to resort to a curve showing which adjustment corresponds to which setting.

Particularly advantageous embodiments of the invention will appear from the dependent claims.

The invention will now be explained in further detail with reference to the drawing, wherein
Figure 1 is a cross-sectional view through a regulator valve with a regulator insert configured in accordance with the invention;
Figure 2a shows a regulator valve according to the invention, seen from the side, in a first setting;
Figure 2b is a cross sectional view through the regulator insert shown in Figure 2a;
Figure 3a shows a regulator insert according to the invention seen from the side in another setting;
Figure 3b is a cross sectional view through the regulator insert shown in Figure 3a;
Figure 4 shows a curve of the linear correlation between the size of the overall area of the inflow openings and the constant liquid flow across the insert; and
Figure 5 shows a curve of the correlation between the size of the overall area of the inflow openings and the constant liquid flow across a known regulator insert.

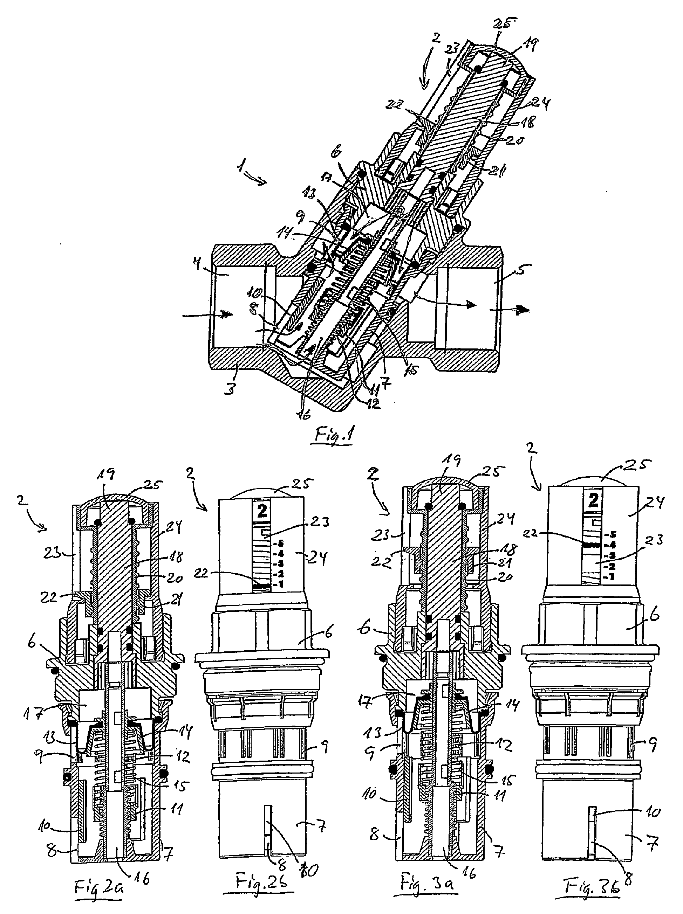

Figure 1 is a cross sectional view of a regulator valve 1 with a regulator insert 2 configured in accordance with the invention. The regulator valve 1 comprises a valve housing 3 which is typically cast from eg brass. The valve housing 3 comprises an inlet part 4 and an outlet part 5 that are aligned and can, via an internal thread (not shown) be interconnected with two pipes in the plant where the regulator valve 1 is used.

The regulator insert 2 - or just the insert 2- is arranged in a slanting seat in the valve housing 3 and is mounted via cooperating threads between the valve housing 3 and a mounting sleeve 6 on the insert 2, as is commonly known. It is of no consequence that the insert 2 is arranged slopingly in the valve housing 3 as it may just as well be arranged differently.

Apart from the mounting sleeve 6, the insert 2 comprises a cup-shaped through-flow part 7 with inflow openings 8 and outflow openings 9. The inflow openings 8 can be adjusted steplessly to a desired flow across the insert 2 since, interiorly of the cup-shaped through-flow part 7, an axially displaceable closure skirt 10 is provided. The closure skirt 10 has an internal hub 11 which threadedly engages a spindle 12 that extends through the entire cup-shaped part 7. When the spindle 12 is rotated, as will be described later, the closure skirt 10 will be shifted upwards or downwards in the cup-shaped part 7 and hence increase or reduce the overall area of the inflow openings 8.

At the outflow openings 9 a roller membrane 13 is provided that closes off the outflow openings 9 to a larger or smaller degree, in response to the pressure conditions across and through the insert 2. At its outer peripheral edge, the roller membrane 13 is secured between the mounting bushing 6 and the cup-shaped part 7, while the inner peripheral edge is secured to a cap 14 arranged to be freely rotatable and axially displaceable on the spindle 12. A helical spring 15 is arranged between the hub 11 of the closure skirt 7 and the cap 14.

The spindle 12 has a central cavity 16 which is, at the one end, in open communication with the inlet part 4 of the valve housing 3 and, at the other end, in open communication with a space 17 above the roller membrane 13. The closing off of the outflow openings 9 is thus determined by the pressure conditions prevailing at any time across and through the insert, as the cap 14 will at a state of equilibrium between the pressure in the liquid on either side of the roller membrane 13 and the spring force from the spring 15.

On the external side of the mounting sleeve 6, an adjustment device is provided that comprises a central shaft 18 being in non-rotatable engagement with the spindle 12 that extends down into the cup-shaped part 7. The central spindle 18 is rotatably journalled in the mounting sleeve 6, and rotation of the shaft 18 entails a rotation of the spindle 12, whereby the closure skirt 10 is shifted upwards or downwards via the cooperating threads on the spindle 12 and the hub 11 of the closure skirt 10. Rotation of the shaft 18 is accomplished by means of a key (not shown) that fits with a quadrangular engagement part 19 at the top of the shaft 18.

The shaft 18 is in non-rotatable engagement with a sleeve 20 which is provided with an external thread. Exteriorly on the bushing 20 and in threading engagement there with, an annular indicator element 21 provided with an indicator pin 22 is provided. The indicator pin 22 is arranged to be axially displaceable in a groove 23 in an external jacket 24. When the shaft 18 is rotated, the indicator element 21 is shifted proportionately upwards or downwards, while the indicator pin 22 can be seen in the groove 23, whereby the degree of opening of the inflow openings 8 can be read. This will appear clearly form Figures 2a and 3a.

A cover cap 25 is mounted above the end of the shaft 18 so as to accomplish an attractive appearance. Moreover, various sealing rings (O-rings) are provided in the insert 2 and between the insert 2 and the valve housing 3. Such sealing rings are commonly known and will not be described in further detail herein.

Now the adjustment mechanism will be described in further detail with reference to Figures 2a, 2b, 3a and 3b; Figures 2a and 2b showing the insert 2 seen in lateral views and in cross sectional views in a first setting of the inflow openings 8 on 1,2; and Figures 3a and 3b showing the insert 2 in lateral views and in cross sectional views in another setting of the inflow openings 8 on 4,2. As will appear from Figures 2a and 3a, the degree of closure of the inflow openings 8 can read on a linear scale, wherein the integer value can be read next to the groove 23 aligned with the indicator pin 22, while the decimal can be read on the upper part of the rotatable skirt 20. Thus, from the setting shown in Figures 2a and 2b (1,2) it will appear that the shaft 18 has rotated thrice in order to assume the setting shown in Figures 3a and 3b (4,2). This means that the closure skirt 10 has been shifted relatively accordingly into the cup-shaped part 7, as will also appear clearly from Figure 3a, and the overall area of the inflow openings 8 has been increased.

In the shown embodiment the thread pitch on the sleeve 20 exceeds the thread pitch on the spindle 12, which means that the absolute displacement of the closure skirt 10 does not correspond to the absolute displacement of the indicator element 21. However, this is of no consequence within the context of this invention; rather it entails only that that external scale is easier to read.

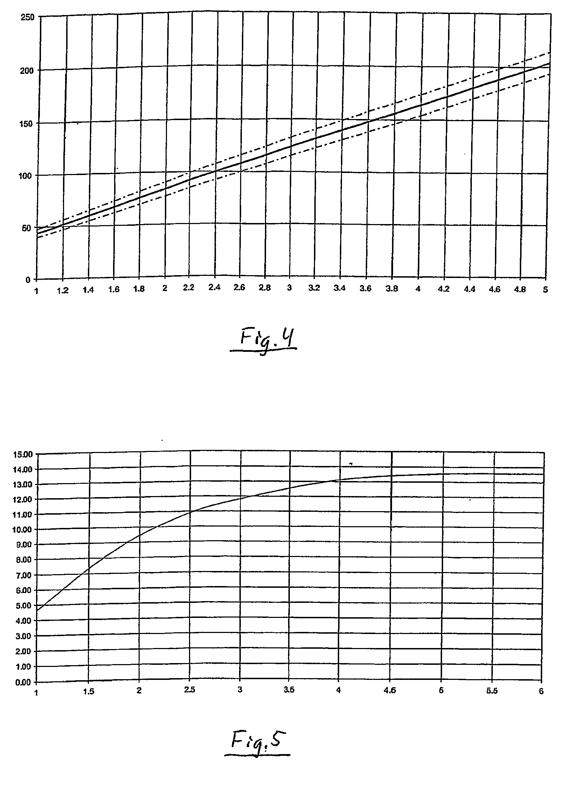

Since the one end of the spring 15 abuts against the hub 11 of the closure skirt 10, a certain degree of compression will occur on the spring 15, when the closure skirt 10 is moved into the cup-shaped part 7; that is: when the overall area of the inflow openings 8 is increased. An increase in the overall area of the inflow openings 8 entails an increase in the constant flow of liquid through the insert, and it has been found that arrangement of the spring 15 in the described manner brings about an approximately linear correlation between the size of the overall area of the inflow openings 8 and the constant liquid flow through the insert. This is shown in Figure 4 that shows the result of a number of tests performed with the shown regulator insert 2. For comparison Figure 5 shows a corresponding curve achieved by tests with a regulator insert of the known type, wherein the compression of the spring is not adjusted in accordance with the dimensions of the inflow openings.

Thus, by fully drawn line Figure 4 shows the averagely measured liquid flow through the insert at a given degree of opening if the inflow openings 8. The figures on the abscissa corresponds to the scale shown on the jacket 24 in Figures 2b and 3b, and they are linearly proportionate with the overall area of the inflow openings 8. The ordinate shows the measured flow through the insert in litres per hour (l/h). The dash-dotted lines to each side of the fully drawn line show the spread of the measurement result and, as will appear, there is an at least approximately linear correlation between the scale figures and the flow.

For comparison, Figure 5 shows, as mentioned, the flow through an insert where no adjustment of the length of the spring takes place, when the degree of opening of the inflow openings is changed. The curved shape entails that it is necessary to resort to that curve when it is desired to adjust the insert to another constant flow. In Figure 5, the numbers on the abscissa are again linearly proportionate with the overall area of the inflow openings, while the ordinate shows the measured flow through the insert in litres per hour (I/h).

The invention was described with reference to a preferred embodiment of the invention, where the size of the inflow openings 8 can be adjusted from the outside. However, nothing prevents the invention from lending itself for use also within the context of a regulator insert where the inflow openings can be adjusted only when the regulator insert is dismounted from the valve housing (eg as known from WO 95/12082).

## Claims

1. An adjustable regulator insert (2) for valves (1), in particular for controlling the liquid flow in a plant for central heating or air conditioning, said insert (2) comprising inflow openings (8) and outflow openings (9), wherein the outflow openings (9) are closed off in response to the difference in pressure across the insert (2) under the influence of a spring (15) that seeks to keep the outflow openings (9) open, said insert (2) being furthermore provided with means for adjustably closing off the inflow openings (8), **characterised in that** the insert (2) is configured such that a certain degree of adjustable closure of the inflow openings (8) entails a compression of the spring (15) which is inversely proportionate with the closure.

2. An insert according to claim 1, **characterised in that** the inflow openings (8) and the outflow openings (9) are configured in a cup-shaped part (7), and that the outflow openings (9) are closed off by a roller membrane (13).

3. An insert according to claim 2, **characterised in that** the closure of the inflow openings (8) takes place via an axially displaceable closure skirt (10); and that the one end of the spring (15) abuts against the closure skirt (10).

4. An insert according to claim 3, **characterised in that** the axially displaceable closure skirt (10) is, via a thread, connected to a shaft (18) that extends out of the insert (2).

5. An insert according to any one of claims 1-4, **characterised in that** the insert (2) is provided with an indicator element (21) that shows the degree of closure of the inflow openings (8).

## Patentansprüche

1. Verstellbarer Reglereinsatz (2) für Ventile (1), insbesondere zur Regelung der Flüssigkeitsströmung in einer Zentralheizungs- oder Klimatisierungsanlage, wobei der Einsatz (2) Einströmungsöffnungen (8) und Ausströmungsöffnungen (9) umfasst, wobei die Ausströmungsöffnungen (9) in Reaktion auf die Differenz des Drucks im Einsatz (2) unter dem Einfluss einer Feder (15) abgesperrt werden, die bestrebt ist, die Ausströmungsöffnungen (9) offen zu halten, wobei der Einsatz (2) weiterhin mit Mitteln zum verstellbaren Absperren der Einströmungsöffnungen (8) ausgestattet ist, **dadurch gekennzeichnet, dass** der Einsatz (2) so konfiguriert ist, dass ein gewisser Grad des verstellbaren Absperrens der Einströmungsöffnungen (8) ein Zusammendrücken der Feder (15) bewirkt, das sich umgekehrt proportional zur Absperrung verhält.

2. Einsatz nach Anspruch 1, **dadurch gekennzeichnet, dass** die Einströmungsöffnungen (8) und die Ausströmungsöffnungen (9) in einem becherförmigen Teil (7) konfiguriert sind und dass die Ausströmungsöffnungen (9) durch eine Rollenmembran (13) abgesperrt werden.

3. Einsatz nach Anspruch 2, **dadurch gekennzeichnet, dass** das Absperren der Einströmungsöffnungen (8) über einen axial verschiebbaren Absperrkragen (10) stattfindet und dass das eine Ende der Feder (15) an den Absperrkragen (10) angrenzt.

4. Einsatz nach Anspruch 3, **dadurch gekennzeichnet, dass** der axial verschiebbare Absperrkragen (10) über ein Gewinde mit einer Welle (18) verbunden ist, die aus dem Einsatz (2) herausragt.

5. Einsatz nach einem der Ansprüche 1 bis 4, **dadurch gekennzeichnet, dass** der Einsatz (2) mit einem Anzeigerelement (21) versehen ist, das den Grad der Absperrung der Einströmungsöffnungen (8) zeigt.

## Revendications

1. Insert régulateur réglable (2) pour vannes (1), servant en particulier à commander un écoulement de liquide dans une installation de chauffage central ou de climatisation, ledit insert (2) comprenant des ouvertures d'arrivée (8) et des ouvertures de sortie (9), les ouvertures de sortie (9) étant fermées en réponse à la différence de pression à travers l'insert (2) sous l'influence d'un ressort (15) qui cherche à maintenir les ouvertures de sortie (9) en position ouverte, ledit insert (2) étant en outre équipé d'un moyen servant à fermer de manière réglable les ouvertures d'arrivée (8), **caractérisé en ce que** l'insert (2) est configuré de telle manière qu'un certain degré de fermeture réglable des ouvertures d'arrivée (8) implique une compression du ressort (15) qui est inversement proportionnelle à la fermeture.

2. Insert selon la revendication 1, **caractérisé en ce que** les ouvertures d'arrivée (8) et les ouvertures de sortie (9) sont configurées de manière à être des pièces en forme de cuvette (7), et que les ouvertures de sortie (9) sont fermées par une membrane (13).

3. Insert selon la revendication 2, **caractérisé en ce que** la fermeture des ouvertures d'arrivée (8) est produite par le biais d'une jupe d'obturation qui se déplace dans le sens axial (10) ; et **en ce qu'**une extrémité du ressort (15) porte contre la jupe d'obturation (10) .

4. Insert selon la revendication 3, **caractérisé en ce que** la jupe d'obturation qui se déplace dans le sens axial (10) est reliée, par le biais d'un filetage, à un arbre (18) qui s'étend hors de l'insert (2).

5. Insert selon l'une quelconque des revendications 1 à 4, **caractérisé en ce que** l'insert (2) est équipé d'un élément d'indication (21) qui montre le degré de fermeture des ouvertures d'arrivée (8) .
